# EUROPÄISCHE PATENTSCHRIFT

(11) **EP 1 735 576 B1**
(45) Veröffentlichungstag und Bekanntmachung des Hinweises auf die Patenterteilung: **01.10.2008**
(21) Anmeldenummer: 05707552.5
(22) Anmeldetag: 21.02.2005
(51) Int. Cl.: F27B 7/20, C04B 7/36, C04B 7/43

(54) **ANLAGE UND VERFAHREN ZUR HERSTELLUNG VON ZEMENTKLINKER**
INSTALLATION AND METHOD FOR THE PRODUCTION OF CEMENT CLINKER
INSTALLATION ET PROCEDE DE FABRICATION DE CLINKER DE CIMENT

(30) Priorität: 16.04.2004 DE 102004018571
(43) Veröffentlichungstag der Anmeldung: 27.12.2006
(73) Patentinhaber: POLYSIUS Aktiengesellschaft, 59269 Beckum (DE)
(72) Erfinder: ERPELDING, Richard, 59269 Beckum (DE); DRIEMEIER, Günter, 49536 Lienen (DE)
(74) Vertreter: Tetzner, Michael
(86) Internationale Anmeldenummer: PCT/EP2005/001787
(87) Internationale Veröffentlichungsnummer: WO 2005/108891

(56) Entgegenhaltungen:
- EP-B- 0 880 481
- DE-A1- 10 011 327
- DE-A1- 19 649 922
- US-A1- 2004 042 946

## Beschreibung

Die Erfindung betrifft eine Anlage sowie ein Verfahren zur Herstellung von Zementklinker, wobei Rohmehl in einem Wärmetauscher vorgewärmt und in einem Ofen zu Zementklinker gebrannt wird.

Im Ofen bilden sich durch die dort herrschenden hohen Temperaturen der Flamme unter anderem Schwefel- und Stickoxide, die aus den Abgasen entfernt werden müssen.

Aus der DE-A-196 49 922 ist ein Verfahren und eine Vorrichtung zur Wärmebehandlung von feinkörnigem Gut bekannt, wobei eine Reduzierung der Stickoxide durch gezielte Zuführung von Rohmehl aus der zweituntersten und drittuntersten Vorwärmerstufe in den Reaktionsraum des Calcinators erreicht wird.

In der DE-A-100 11 327 wird ein Verfahren zur gleichzeitigen Entschwefelung und Entstickung ohne Bildung von Ammoniumsulfat bzw. Ammoniumhydrogensulfat beschrieben, bei dem der Abbau von NOₓ zu N₂ und H₂O erfolgt. Die Behandlung der Schwefel- und Stickoxide enthaltenen Abgase wird in einer Vorrichtung durchgeführt, die mit einem festen Katalysator bestückt ist und in Strömungsrichtung der Abgase nach dem Wärmetauscher angeordnet ist.

Der Erfindung liegt nun die Aufgabe zugrunde, die katalytische Abgasreinigung bei einer Anlage bzw. einem Verfahren zur Herstellung von Zementklinker weiter zu verbessern.

Erfindungsgemäß wird diese Aufgabe durch die Merkmale der Ansprüche 1 bzw. 11 gelöst.

Die erfindungsgemäße Anlage zur Herstellung von Zementklinker besteht im wesentlichen aus einem Wärmetauscher zum Vorwärmen von Rohmehl, einem Ofen zum Fertigbrennen des Zementklinkers, wobei die Abgase des Ofens den Wärmetauscher durchströmen, einem Katalysator der in Strömungsrichtung der Abgase nach dem Wärmetauscher angeordnet ist, wobei der Katalysator für eine Reaktion von NO mit CO ausgelegt ist, und Mitteln zur Analyse der Abgase vor und/oder nach dem Katalysator. Weiterhin ist ein Calcinator zum Vorcalcinieren des vorgewärmten Rohmehls vorgesehen.

Beim erfindungsgemäßen Verfahren zur Herstellung von Zementklinker wird Rohmehl in einem Wärmetauscher vorgewärmt und in einem Ofen zu Zementklinker gebrannt, wobei die Abgase des Ofens nacheinander den Wärmetauscher und einen Katalysator durchströmen, wobei die Abgase vor und/oder nach dem Katalysator analysiert werden. Das vorgewärmte Rohmehl wird zudem in einem Calcinator vorcalciniert, d.h. das Calciumcarbonat, das im Rohmehl enthalten ist, wird thermisch in Calciumoxid und CO₂ gespalten. Weiterhin wird der Gehalt an CO durch die Verbrennungsbedingungen im Calcinator (4) und/oder durch Zugabe von weiterem Brennstoff gezielt auf den Katalysator (5) abgestimmt wird.

Durch eine geeignete Wahl der Verbrennungsbedingungen im Calcinator kann bereits dort eine Reduktion der Schadstoffe im Abgas erreicht werden, so dass der Katalysator für geringere Minderungsraten ausgelegt werden kann.

Weitere Ausgestaltungen der Erfindung sind Gegenstand der Unteransprüche.

Gemäß einer bevorzugten Ausgestaltung weist der Calcinator Mittel zur gestuften Zufuhr von Brennstoff und/oder Mittel zur gestuften Zufuhr von Verbrennungsluft auf. Es ist außerdem möglich, dass eine zusätzliche Brennkammer im Calcinator vorgesehen wird, die nicht von den Abgasen des Ofens durchströmt wird. Durch diese Maßnahmen lassen sich die Verbrennungsbedingungen im Calcinator sehr gezielt einstellen und auf die verwendeten Brennstoffe abstimmen.

Dadurch, dass der Katalysator für eine Reaktion von NO mit CO ausgelegt ist, kann der Calcinator vorteilhaft so betrieben werden, dass vermehrt CO im Abgas enthalten ist. Bei einem solchen Katalysator wird zweckmäßigerweise der Gehalt an CO durch die Verbrennungsbedingungen im Calcinator und/oder durch Zugabe von weiterem Brennstoff gezielt auf den Katalysator abgestimmt.

Weiterhin ist es möglich ein Reduktionsmittel, insbesondere einen Ammoniumträger und/oder einen Kohlenwasserstoff, im Bereich des Calcinators und/oder des Wärmetauschers einzubringen. Die Menge des einzubringenden Reduktionsmittels wird entsprechend der Analyse der vor und/oder nach dem Katalysator gemessenen Abgase geregelt.

Weitere Ausgestaltungen und Vorteile der Erfindung werden im folgenden anhand der Beschreibung und der Zeichnung näher erläutert.

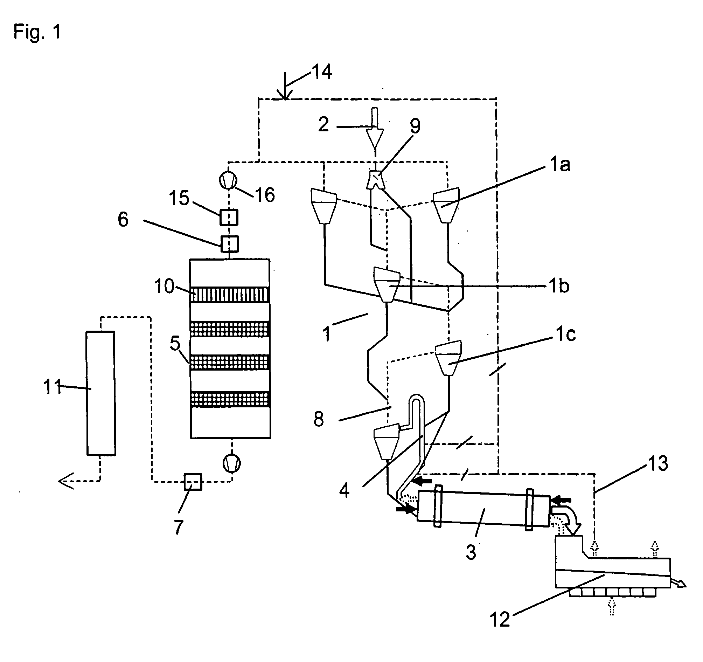

In der Zeichnung zeigen
- Fig. 1: eine schematische Darstellung einer Anlage zur Herstellung von Zementklinker,
- Fig. 2: eine schematische Darstellung im Bereich des Calcinators und
- Fig. 3: eine schematische Darstellung einer Anlage zur Herstellung von Zementklinker gemäß einer weiteren Variante.

Die Anlage besteht im wesentlichen aus einem Wärmetauscher 1 zum Vorwärmen von Rohmehl 2, einem Ofen 3 zum Fertigbrennen des Zementklinkers, wobei die Abgase des Ofens den Wärmetauscher durchströmen, einem Calcinator 4 zum Vorcalcinieren des vorgewärmten Rohmehls sowie einem Katalysator 5, der in Strömungsrichtung der Abgase nach dem Wärmetauscher angeordnet ist. Weiterhin sind Mittels 6 und 7 zu Analyse der Abgase vor und/oder nach dem Katalysator 5 vorgesehen.

Der Wärmetauscher 1 weist mehrere, übereinander angeordnete Zyklonstufen 1a, 1b, 1c auf, wobei das Rohmehl 2 die einzelnen Zyklonstufen von oben nach unten durchströmt während die Abgase 8 (gestrichelt dargestellt) die Zyklonstufen von unten nach oben durchsetzen.

Optional kann die Aufgabe des Rohmehls 2 über eine Materialweiche 9 erfolgen, um einen Teil des Rohmehls im Bereich der obersten Zyklonstufe 1a und einen Teil im Bereich der darunter liegenden Zyklonstufe 1b zuzuführen. Mit dieser Maßnahme kann die Temperatur der Abgase, die nach dem Wärmetauscher 1 in den Katalysator 5 gelangt, gezielt eingestellt bzw. variiert werden.

Der Katalysator wird zweckmäßigerweise zur Minderung von CO und/oder organischen Komponenten und/oder von NH₃ und/oder Stickstoffoxiden und/oder zur Umsetzung von SO₂ in SO₃ genutzt.

Der Katalysator 5 kann in ein oder mehreren Ebenen angeordnet werden, wobei ebene und/oder geriffelte Platten zur Anwendung kommen können. Der Katalysator kann wahlweise durch einen V₂O₅/TiO/WO-Katalysator oder durch natürliche bzw. synthetische Kristalle insb. mit Zeolith-Struktur gebildet werden. Der Katalysator kann aber auch eines oder eine Kombination der Elemente der Gruppen Ib, IIb, IIIb, IVb, Vb, VIb, VIIb, VIIIb des Periodensystems enthalten. Es ist auch denkbar, dass die verschiedenen Ebenen des Katalysators mit unterschiedlichen Katalysatormaterialien ausgestattet sind.

In modernen Zementöfen wird das Material in Zyklonwärmetauschern vorgewärmt. Dies hat zufolge, dass das Abgas nach dem letzen Zyklon neben der axialen eine rotierende Strömungskomponente hat. Um eine gleichmäßige Anströmung des Katalysators zu gewährleisten, ist dem Katalysator 5 in Strömungsrichtung der Abgase ein Strömungsgleichrichter 10 vorgeschaltet, welcher die Gasströmung über den Querschnitt vergleichmäßigt und die radialen Geschwindigkeitskomponenten soweit wie möglich verringert. Dies führt zu einer optimalen Ausnutzung des vorhandenen Katalysatorraums und somit zu einer Verringerung des zu installierenden Katalysatorvolumens.

Der Katalysator 5 kann weiterhin mit einer nicht näher dargestellten Vorrichtung ausgestattet sein, die es erlaubt, den am Katalysator anhaftenden Staub zu entfernen.

Nach dem Katalysator ist weiterhin ein Verdampfungskühlturm 11 vorgesehen.

Der im Ofen 3 gebrannte Zementklinker wird anschließend in einem Klinkerkühler 12 gekühlt, wobei die Abluft 13 des Klinkerkühlers (strichpunktiert dargestellt) als Verbrennungsluft im Ofen, Calcinator und ggf. zur Mischung mit dem Abgasen nach dem Wärmetauscher 1 genutzt werden kann.

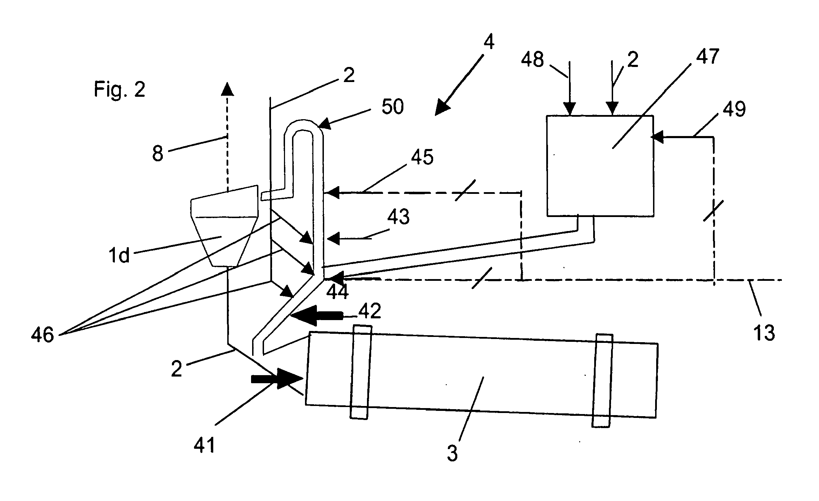

Fig. 2 zeigt eine mögliche Ausführungsform des Calcinators 4, in dem das vorgewärmte Rohmehl 2 unter Zugabe von Brennstoff vorcalciniert wird. Im Abscheidezyklon 1d wird das vorcalcinierte Rohmehl 2 vom Abgas 8 getrennt, wobei das Abgas nachfolgend die Zyklonstufen 1c, 1b und 1a durchströmt, während das vorcalcinierte Rohmehl 2 zum Fertigbrennen in den Ofen 3 gelangt.

In manchen Anwendungsfällen weist der Calcinator lediglich eine Brennstelle am Calcinator 42 auf. Besonders vorteilhaft ist es jedoch, wenn in Kombination mit dieser Calcinatorbrennstelle ein Ofeneinlaufbrenner 41 und/oder weitere Mittel42 und/oder 43 zur gestuften Zugabe von Brennstoff vorgesehen sind. Auf diese Weise ist eine gestufte Verbrennung im Calcinator möglich. So kann beispielsweise im unteren Calcinatorbereich eine reduzierende Atmosphäre geschaffen werden, die zur NOₓ-Minderung beiträgt.

Weiterhin wird Abluft 13 des Klinkerkühlers als Verbrennungsluft zugeführt. Dabei können Mittel 44 und/oder Mittel 45 vorgesehen werden. Wird die Abluft des Kühlers über zwei voneinander beabstandete Stellen im Calcinator zugeführt, spricht man von einer gestuften Zufuhr der Verbrennungsluft, wodurch die Verbrennungsbedingungen mit entsprechenden Drosselklappen noch gezielter hinsichtlich Prozessoptimierung eingestellt werden können.

Auch das Rohmehl 2 kann über eine oder mehrere Stellen 46 dem Calcinator zugeführt werden. Durch eine Mehlsplittung lässt sich insbesondere die Temperatur im Calcinator anpassen, um beispielsweise ein für die NOₓ-Minderung günstiges Temperaturfenster einzustellen.

Eine weitere Option stellt eine zusätzliche Brennkammer 47 dar, die nicht von den Abgasen des Ofens 3 durchströmt wird. Diese zusätzliche Brennkammer 47 weist Mittel 48 zur Zufuhr von Brennstoff und Mittel 49 zur Zufuhr von Abluft des Klinkerkühlers auf. Ferner wird zumindest ein Teil des vorgewärmten Rohmehls 2 in dieser zusätzlichen Brennkammer eingeführt. Die Abgase dieser Brennkammer werden zusammen mit dem Rohmehl an geeigneter Stelle mit den Abgasen aus dem Drehrohrofen 3 zusammengeführt. Weiterhin können Mittel 50 vorgesehen werden, um ein Reduktionsmittel, insbesondere einen Ammoniumträger und/oder einen Kohlenwasserstoff, im Bereich des Calcinators und/oder des Wärmetauschers 1 einzubringen. Die einzubringende Menge an Reduktionsmittel wird zweckmäßigerweise entsprechend der Analyse der vor und/oder nach dem Katalysator gemessenen Abgasen geregelt.

Gemäß einer besonderen Ausgestaltung der Erfindung wird der Katalysator für eine Reaktion von NO mit CO ausgelegt. In diesem Fall wird der Gehalt an CO in den durch den Katalysator 5 strömenden Abgasen durch die Verbrennungsbedingungen im Calcinator und/oder durch Zugabe von weiterem Brennstoff gezielt auf den Calcinator abgestimmt. Der weitere Brennstoff kann beispielsweise über Mittel 14 der Abluft 13 des Klinkerkühlers 12 zugegeben werden, wobei die mit dem Brennstoff versetzte Abluft des Klinkerkühlers in einem Bereich zwischen Wärmetauscher 1 und Katalysator 5 in die Abgase des Vorwärmers 1 einmünden.

Weiterhin kann in Strömungsrichtung vor dem Katalysator noch eine Abscheidestufe 15 für Schwermetalle angeordnet werden.

Durch das Vorsehen eines Ventilators 16 zwischen Wärmetauscher 1 und Katalysator 5 besteht die Möglichkeit, das Ofensystem druckmäßig vom Katalysatorbetrieb zu entkoppeln.

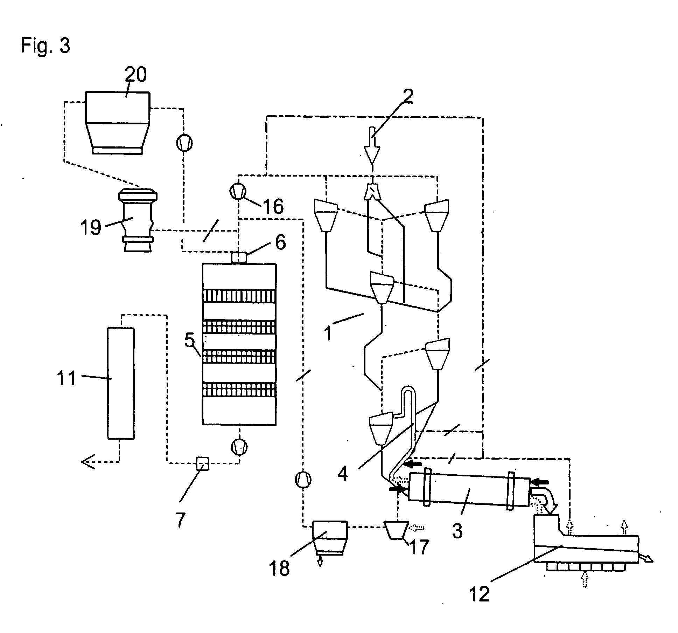

In Fig. 3 ist eine Anlage zur Herstellung von Zementklinker gemäß einer weiteren Ausführungsvariante beschrieben, bei der die Anlage mit einem Bypass ausgestattet ist. Über den Bypass wird ein Teil der Abgase aus dem Ofen 3 vor dem Calcinator 4 ausgeschleust, gekühlt, entstaubt und anschließend vor dem Katalysator 5 den Abgasen wieder zugegeben. Zu diesem Zweck sind Mittel 17 zum Kühlen des Bypasstromes und Mittel 18 zum Entstauben des Bypassstromes vorgesehen.

Alternativ oder in Kombination hierzu wird in Fig. 3 eine weitere Variante offenbart, bei der ein Teil der Abgase in Strömungsrichtung nach dem Wärmetauscher 1 ausgeschleust, einer Kohlemühle 19 und einer Entstaubung 20 zugeführt und anschließend vor dem Katalysator 5 den Abgasen wieder zugegeben wird.

Durch die Kombination des Katalysators mit einem Calcinator 4 ergeben sich insbesondere folgende Vorteile:

Der Calcinator verlagert einen wesentlichen Teil (ca. 50%) der für die Herstellung des Zementklinkers nötigen Wärmeenergie in einen Temperaturbereich in dem thermisches NOₓ nur in unwesentlichen Mengen entsteht (ca. 850°C). Wird nun im Calcinator ein Brennstoff eingesetzt, der kein oder nur unwesentliche Mengen Brennstoff-Stickstoff enthält, so sind die NOₓ-Basis-Emissionen geringer. Dies hat Zufolge, dass die katalytische Abgasreinigung für geringere Minderungsraten ausgelegt werden kann. Die Betriebskosten können durch die Einsparung von Reduktionsmitteln weiter gesenkt werden.

Für den Fall, dass der Katalysator die Umsetzung von NO mit CO zu N₂ und CO₂ katalysiert, hat der Calcinator den Vorteil, dass eine mit einem Calcinator ausgestattete Anlage gewöhnlich höhere CO-Emissionen hat als eine reine Drehofenanlage. Dies hat den Vorteil, dass je nach Höhe der CO-Werte komplett auf zusätzliche Reduktionsmittel verzichtet werden kann.

Noch besser ist die Kombination der katalytischen Abgasreinigung mit einem Calcinator, der nach dem Prinzip der gestuften Verbrennung und/oder gestuften Mehlzugabe funktioniert. Diese Calcinatoren sind so konzipiert, dass sie, je nach Art des eingesetzten Brennstoffs, einen Teil des NOₓ, dass im Ofen entstanden ist, reduzieren und die Entstehung von Brennstoff-NOₓ minimieren. Somit ist die NOₓ-Grundlast noch geringer als bei einer einfachen Calcinator-Anlage mit den oben genannten Vorteilen. Weiterhin besteht die Möglichkeit beim einem Calcinator mit gestufter Verbrennung gezielt CO zu generieren, was im Fall einer NO/CO-Minderung besonders vorteilhaft ist. Bei richtiger Auslegung kann eventuell komplett auf eine zusätzliche Brennstoffeindüsung nach dem Calcinator verzichtet werden.

Das Vorsehen eines Calcinators hat für die nachgeschaltete katalytische Abgasreinigung zudem den Vorteil, dass höhere Abgastemperaturen entstehen, wodurch die im Katalysator ablaufenden Reaktionen schneller und somit mit höherem Umsatz ablaufen. Dadurch kann das benötigte Katalysatorvolumen verringert und die Investitionskosten reduziert werden.

Es ist bekannt, dass sich je nach Rohmaterial im Hochtemperaturprozess des Klinkerbrennens Alkali-, Schwefel- und Chlorkreisläufe zwischen dem Ofen und dem Wärmetauscher ausbilden. Die genannten Stoffe werden bei den hohen Ofentemperaturen in die Gasphase ausgetrieben, im kälteren Wärmetauscher am Material niedergeschlagen und wieder mit in den Ofen transportiert. Aufgrund der Staubverluste der Zyklone gelangen ein Teil dieser Stäube mit dem Gas in den Katalysator, wo sie zu Aktivitätsverlusten führen können. Weiterhin ist bekannt, dass sich bei Einsatz eines Katalysators die im Kreislauf gefahrenen Mengen reduzieren. Somit verringern sich auch die Anteile der Kreislaufelemente im Staub, wodurch die Katalysatorlebensdauer verlängert wird.

## Patentansprüche

1. Anlage zur Herstellung von Zementklinker mit
a. einem Wärmetauscher (1) zum Vorwärmen von Rohmehl (2),
b. einem Ofen (3) zum Fertigbrennen des Zementklinkers, wobei die Abgase des Ofens den Wärmetauscher durchströmen,
c. einem Katalysator (5), der in Strömungsrichtung der Abgase nach dem Wärmetauscher angeordnet ist und
d. Mitteln (6, 7) zur Analyse der Abgase vor und/oder nach dem Katalysator,
**dadurch gekennzeichnet, dass** weiterhin ein Calcinator (4) zum Vorcalcinieren des vorgewärmten Rohmehls vorgesehen ist und der Katalysator (5) für eine Reaktion von NO mit CO ausgelegt ist.

2. Anlage nach Anspruch 1, **dadurch gekennzeichnet, dass** der Calcinator (4) Mittel (41, 42, 43) zur gestuften Zufuhr von Brennstoff und/oder Mittel (44, 45) zur gestuften Zufuhr von Verbrennungsluft aufweist.

3. Anlage nach Anspruch 1 oder 2, **dadurch gekennzeichnet, dass** der Calcinator (4) eine zusätzliche Brennkammer (47) aufweist, die nicht von den Abgasen des Ofens durchströmt wird.

4. Anlage nach einem oder mehreren der Ansprüche 1 bis 3, **dadurch gekennzeichnet, dass** der Calcinator (4) Mittel (46) zur gestuften Zufuhr von vorgewärmtem Rohmehl aufweist.

5. Anlage nach Anspruch 1, **dadurch gekennzeichnet, dass** dem Katalysator (5) in Strömungsrichtung der Abgase ein Strömungsgleichrichter (10) vorgeschaltet ist.

6. Anlage nach Anspruch 1, **dadurch gekennzeichnet, dass** zwischen dem Wärmetauscher (1) und dem Katalysator (5) eine Abscheidestufe (15) für Schwermetalle angeordnet ist.

7. Anlage nach Anspruch 1, **dadurch gekennzeichnet, dass** der Wärmetauscher aus mehreren, übereinander angeordneten Zyklonstufen besteht, wobei das Rohmehl die einzelnen Zyklonstufen von oben nach unten durchströmt, während die Abgase (8) die Zyklonstufen von unten nach oben durchsetzen, und wobei ferner eine Materialweiche (9) vorgesehen ist, um einen Teil des Rohmehls im Bereich der obersten Zyklonstufe (1a) und einen Teil im Bereich der darrunterliegenden Zyklonstufe (1b) zuzuführen.

8. Anlage nach Anspruch 1, **dadurch gekennzeichnet, dass** Mittel vorgesehen sind, um Abluft (13) eines Klinkerkühlers (12) und/oder Brennstoff in die Abgase zwischen dem Wärmetauscher (1) und dem Katalysator (5) einzubringen.

9. Anlage nach Anspruch 1, **dadurch gekennzeichnet, dass** Mittel (50) vorgesehen sind, um ein Reduktionsmittel, insbesondere einen Ammoniumträger und/oder Kohlenwasserstoff, im Bereich des Calcinators und/oder des Wärmetauschers einzubringen.

10. Anlage nach Anspruch 1, **dadurch gekennzeichnet, dass** zwischen dem Wärmetauscher (1) und dem Katalysator (5) ein Ventilator (16) angeordnet ist.

11. Verfahren zur Herstellung von Zementklinker, wobei Rohmehl (2) in einem Wärmetauscher (1) vorgewärmt und in einem Ofen (3) zu Zementklinker gebrannt wird und die Abgase (8) des Ofens nacheinander den Wärmetauscher und einen Katalysator (5) durchströmen, wobei die Abgase vor und/oder nach dem Katalysator analysiert werden,
**dadurch gekennzeichnet, dass** das vorgewärmte Rohmehl in einem Calcinator (4) vorcalciniert wird, wobei der Gehalt an CO durch die Verbrennungsbedingungen im Calcinator (4) und/oder durch Zugabe von weiterem Brennstoff gezielt auf den Katalysator (5) abgestimmt wird.

12. Verfahren nach Anspruch 11, **dadurch gekennzeichnet, dass** der Wärmetauscher (1) aus mehreren, übereinander angeordneten Zyklonstufen (1a, 1b, 1c) besteht, wobei das Rohmehl (2) die einzelnen Zyklonstufen von oben nach unten durchsetzt während die Abgase (8) die Zyklonstufen von unten nach oben durchströmen, wobei das Rohmehl in Abhängigkeit der Temperatur der durch den Katalysator (5) strömenden Abgase aufgeteilt und im Bereich von zwei unterschiedlichen Zyklonstufen aufgegeben wird.

13. Verfahren nach Anspruch 11, **dadurch gekennzeichnet, dass** der Calcinator (4) mit einer gestuften Verbrennung und/oder einer gestuften Luftzufuhr und/oder einer gestuften Rohmehlaufgabe gefahren wird.

14. Verfahren nach Anspruch 11, **dadurch gekennzeichnet, dass** ein Reduktionsmittel, insbesondere ein Ammoniumträger und/oder ein Kohlenwasserstoff, im Bereich des Calcinators (4) und/oder des Wärmetauschers (1) eingebracht wird.

15. Verfahren nach Anspruch 14, **dadurch gekennzeichnet, dass** die einzubringende Menge an Reduktionsmittel entsprechend der Analyse der vor und/oder nach dem Katalysator (5) gemessenen Abgase geregelt wird.

16. Verfahren nach Anspruch 11, **dadurch gekennzeichnet, dass** ein für eine Reaktion von NO mit CO ausgelegter Katalysator Verwendung findet.

17. Verfahren nach Anspruch 11, **dadurch gekennzeichnet, dass** ein Teil der Abgase aus dem Ofen vor dem Calcinator (4) ausgeschleust, gekühlt, entstaubt und anschießend vor dem Katalysator (5) den Abgasen wieder zugegeben wird.

18. Verfahren nach Anspruch 11, **dadurch gekennzeichnet, dass** ein Teil der Abgase in Strömungsrichtung der Abgase nach dem Wärmetauscher (1) ausgeschleust, einer Kohlemühle (19) und einer Entstaubung (20) zugeführt und anschießend vor dem Katalysator (5) den Abgasen wieder zugegeben wird.

## Claims

1. Plant for the production of cement clinker, having
a. a heat exchanger (1) for preheating raw meal (2),
b. a kiln (3) for completely burning the cement clinker, the exhaust gases from the kiln flowing through the heat exchanger,
c. a catalyst (5) which is arranged downstream of the heat exchanger in the direction of flow of the exhaust gases, and
d. means (6, 7) for analysing the exhaust gases upstream and/or downstream of the catalyst,
**characterised in that** a calcinator (4) for precalcining the preheated raw meal is also provided, and the catalyst (5) is designed for a reaction of NO with CO.

2. Plant according to claim 1, **characterised in that** the calcinator (4) comprises means (41, 42, 43) for the staged supply of fuel and/or means (44, 45) for the staged supply of combustion air.

3. Plant according to claim 1 or 2, **characterised in that** the calcinator (4) comprises an additional combustion chamber (47) through which the exhaust gases from the kiln do not flow.

4. Plant according to one or more of claims 1 to 3, **characterised in that** the calcinator (4) comprises means (46) for the staged supply of preheated raw meal.

5. Plant according to claim 1, **characterised in that** a flow rectifier (10) is provided upstream of the catalyst (5) in the direction of flow of the exhaust gases.

6. Plant according to claim 1, **characterised in that** a separator stage (15) for heavy metals is arranged between the heat exchanger (1) and the catalyst (5).

7. Plant according to claim 1, **characterised in that** the heat exchanger comprises a plurality of cyclone stages arranged one above the other, the raw meal flowing through the individual cyclone stages from top to bottom while the exhaust gases (8) pass through the cyclone stages from bottom to top, there further being provided a material deflector (9) for feeding part of the raw meal in the region of the uppermost cyclone stage (1a) and part in the region of the cyclone stage (1b) located beneath it.

8. Plant according to claim 1, **characterised in that** means are provided for introducing exhaust air (13) from a clinker cooler (12) and/or fuel into the exhaust gases between the heat exchanger (1) and the catalyst (5).

9. Plant according to claim 1, **characterised in that** means (50) are provided for introducing a reducing agent, especially an ammonium carrier and/or hydrocarbon, in the region of the calcinator and/or of the heat exchanger.

10. Plant according to claim 1, **characterised in that** a fan (16) is arranged between the heat exchanger (1) and the catalyst (5).

11. Method for the production of cement clinker, raw meal (2) being preheated in a heat exchanger (1) and being burned in a kiln (3) to form cement clinker, and the exhaust gases (8) from the kiln flowing in succession through the heat exchanger and a catalyst (5), the exhaust gases being analysed upstream and/or downstream of the catalyst,
**characterised in that** the preheated raw meal is precalcined in a calcinator (4), the content of CO being adjusted to the catalyst (5) in a targeted manner by the combustion conditions in the calcinator (4) and/or by the addition of further fuel.

12. Method according to claim 11, **characterised in that** the heat exchanger (1) comprises a plurality of cyclone stages (1a, 1b, 1c) arranged one above the other, the raw meal (2) passing through the individual cyclone stages from top to bottom, while the exhaust gases (8) flow through the cyclone stages from bottom to top, the raw meal being divided in dependence on the temperature of the exhaust gases flowing through the catalyst (5) and being delivered in the region of two different cyclone stages.

13. Method according to claim 11, **characterised in that** the calcinator (4) is operated with staged combustion and/or a staged air supply and/or a staged raw meal supply.

14. Method according to claim 11, **characterised in that a** reducing agent, especially an ammonium carrier and/or a hydrocarbon, is introduced in the region of the calcinator (4) and/or the heat exchanger (1).

15. Method according to claim 14, **characterised in that** the amount of reducing agent to be introduced is adjusted according to the analysis of the exhaust gases measured upstream and/or downstream of the catalyst (5).

16. Method according to claim 11, **characterised in that** a catalyst designed for a reaction of NO with CO is used.

17. Method according to claim 11, **characterised in that** a portion of the exhaust gases from the kiln is discharged upstream of the calcinator (4), cooled, freed of dust and then added to the exhaust gases again upstream of the catalyst (5).

18. Method according to claim 11, **characterised in that** a portion of the exhaust gases is discharged downstream of the heat exchanger (1) in the direction of flow of the exhaust gases, is fed to a coal pulveriser (19) and a dust removal means (20) and is then added to the exhaust gases again upstream of the catalyst (5).

## Revendications

1. Installation pour la fabrication de clinker de ciment, avec
a. un échangeur thermique (1) pour le préchauffage de la farine crue (2),
b. un four (3) pour la cuisson complète du clinker de ciment, les effluents gazeux du four passant à travers l'échangeur thermique,
c. un catalyseur (5), qui est disposé en aval de l'échangeur thermique, dans la direction de passage des effluents gazeux, et
d. des moyens (6, 7) pour l'analyse des effluents gazeux en amont et / ou en aval du catalyseur,
**caractérisée en ce que,** de plus, un four à calciner (4) est prévu pour la pré-calcination de la farine crue, et que le catalyseur (5) est conçu pour une réaction de NO avec CO.

2. Installation selon la revendication 1, **caractérisée en ce que** le four à calciner (4) présente des moyens (41, 42, 43) pour l'alimentation étagée en combustibles et / ou des moyens (44, 45) pour l'alimentation étagée en air de combustion.

3. Installation selon revendication 1 ou 2, **caractérisée en ce que** le four à calciner (4) présente une chambre de combustion supplémentaire (47) qui n'est pas traversée par les effluents gazeux du four.

4. Installation selon l'une ou plusieurs des revendications 1 à 3, **caractérisée en ce que** le four à calciner (4) présente des moyens (46) pour l'alimentation étagée en farine crue préchauffée.

5. Installation selon la revendication 1, **caractérisée en ce qu'**un dispositif d'orientation du flux (10) est installé en amont du catalyseur (5), dans la direction de passage.

6. Installation selon la revendication 1, **caractérisée en ce que,** entre l'échangeur thermique (1) et le catalyseur (5), est agencé un étage de séparation (15) pour les métaux lourds.

7. Installation selon la revendication 1, **caractérisée en ce que** l'échangeur thermique est composé de plusieurs étages de cyclone superposés, la farine crue traversant les différents étages de cyclone de haut en bas, tandis que les effluent gazeux (8) traversent les étages de cyclone de bas en haut, et, en outre, une dérivation (9) pour les matériaux étant prévue pour conduire une partie de la farine crue dans la région de l'étage de cyclone supérieur (1a) et une partie dans la région de l'étage de cyclone (1b) situé au-dessous.

8. Installation selon la revendication 1, **caractérisée en ce que** des moyens sont prévus pour conduire de l'air évacué (13) par un refroidisseur (12) de clinker et / ou un combustible dans les effluents gazeux, entre l'échangeur thermique (1) et le catalyseur (5).

9. Installation selon la revendication 1, **caractérisée en ce que** des moyens sont prévus pour conduire un agent de réduction, en particulier un porteur d'ammonium et / ou du carbure d'hydrogène dans la région du four à calciner et / ou de l'échangeur thermique.

10. Installation selon la revendication 1, **caractérisée en ce qu'**un ventilateur (16) est installé entre l'échangeur thermique (1) et le catalyseur (5).

11. Procédé pour la fabrication de clinker de ciment, la farine crue (2) étant préchauffée dans un échangeur thermique (1) et transformée en clinker de ciment par cuisson dans un four (3), et que les effluents gazeux (8) du four traversent successivement l'échangeur thermique et le catalyseur (5), lesdits effluents gazeux étant analysés en amont et / ou en aval du catalyseur, **caractérisé en ce que** la farine crue préchauffée est pré-calcinée dans un four de calcination (4), la teneur en CO étant sélectivement adaptée au catalyseur (5) par les conditions de combustion à l'intérieur du four à calciner (4) et / ou par apport d'autres combustibles.

12. Procédé selon la revendication 11, **caractérisé en ce que** l'échangeur thermique (1) est composé de plusieurs étages de cyclone (1a, 1b, 1c), qui sont disposés les uns au-dessus des autres, la farine crue (2) traversant les différents étages de cyclone de haut en bas, bas, tandis que les effluents gazeux (8) traversent les étages de cyclone de bas en haut, et, la farine crue étant, en fonction de la température des effluents gazeux passant par le catalyseur (5), divisée et conduite dans la zone de deux différents étages de cyclone.

13. Procédé selon revendication 11, **caractérisé en ce que** le four à calciner (4) est exploité avec une combustion étagée et / ou une amenée d'air étagée et / ou une alimentation en farine crue étagée.

14. Procédé selon la revendication 11, **caractérisé en ce qu'**un agent de réduction, en particulier un porteur d'ammonium et / ou du carbure d'hydrogène, est conduit dans la zone du four à calciner (4) et / ou de l'échangeur thermique (1).

15. Procédé selon la revendication 14, **caractérisé en ce que** la quantité d'agent de réaction à utiliser est réglée conformément à l'analyse des effluents gazeux, qui sont mesurés en amont et / ou en aval du catalyseur (5).

16. Procédé selon la revendication 11, **caractérisé en ce que** l'on utilise un catalyseur qui est conçu pour une réaction de NO avec CO.

17. Procédé selon la revendication 11, **caractérisé en ce qu'**une partie des effluents gazeux du four sont évacués, refroidis, dépoussiérés en amont du four à calciner (4) et sont ensuite ajoutés de nouveau aux effluents gazeux, en amont du catalyseur (5).

18. Procédé selon la revendication 11, **caractérisé en ce qu'**une partie des effluents gazeux est évacuée, dans la direction de passage, en aval de l'échangeur thermique (1), conduits à un broyeur à charbon (19) et à un dispositif de dépoussiérage (20), et ajoutés de nouveau aux effluents gazeux, en amont du catalyseur (5).
